# EUROPEAN PATENT APPLICATION

(11) **EP 4 116 679 A1**
(43) Date of publication of application: **11.01.2023**
(21) Application number: 22161289.8
(22) Date of filing: 10.03.2022
(51) Int. Cl.: G01F 23/70, G01F 23/68, G01F 23/72, G01F 23/74

(54) **DETECTION DEVICE FOR MONITORING THE QUANTITY OF A LIQUID IN A CONTAINER**

(30) Priority: 05.07.2021 IT 202100017630
(71) Applicant: Mont.El Apparecchiature Elettroelettroniche S.r.l., 25057 Sale Marasino (BS) (IT)
(72) Inventor: QUADRI, Stefano, 25010 ISORELLA BS (IT); NOVALI, Ivano Stefano, 25057 SALE MARASINO BS (IT)
(74) Representative: Modiano, Micaela Nadia

(57) **Abstract**

A detection device (1) for monitoring the quantity of a liquid (L) in a container (C), comprising:
- a guiding element (2) which is extended along a longitudinal axis (Y), adapted to be arranged vertically in a container (C),
- a floater (3) which can slide along the longitudinal axis (Y), and
- an electronic control unit (4) configured to identify the position of the floater (3) along the longitudinal axis (Y) and produce, as a function of the position, a signal that is indicative of the quantity of liquid (L) that is present in the container (C); the guiding element (2) comprises at least one row of circuits (20), which are arranged substantially along the longitudinal axis (Y), each comprising an inductor (21) and having a respective predetermined inductance value;
- the floater (3) comprises a proximal element (31) made of electrically conducting material which faces the circuits (20) so as to vary the inductance value of at least one of the circuits (20) when it is arranged thereat;
- the electronic control unit (4) is configured to detect cyclically any variation of the inductance values of the circuits (20), so as to determine the position of the floater (3) as a function of any variations of the inductance values.

## Description

The present invention relates to a detection device for monitoring the quantity of a liquid in a container, for example the quantity of fuel present in a tank.

In greater detail, the present invention relates to a system for measuring the quantity of liquid in a container of the type commonly termed "floater", in which the quantity of the liquid is detected on the basis of the position of a floater which floats in said liquid.

Currently, in particular for measuring the quantity of liquid present in a fuel tank, floater devices with resistive variation and sliding contacts are commonly used.

In these systems of the known type, the detection device comprises a sliding floater, to which a sliding contact is fixed integrally, which slides along a supporting rod constituted essentially by a printed circuit provided with copper-coated tracks connected to resistors of different values. The sliding contacts are thus immersed in the liquid inside the container. The length of the rod plus any mechanical guiding elements must be suitable to cover all the tank of which one wishes to measure the quantity of liquid contained.

In some models, the delivery and return pipes are also inserted in the same flange used to fix the supporting rod to the tank, in order to make the fluid flow into, and from, said tank.

The floater obviously must have an appropriate density and mass to overcome the friction forces and float, rising when the level of the liquid rises and descending when the level lowers.

The sliding contacts, by moving along the rod, modify, based on the position in which they are located, the overall equivalent resistance that is measured across the upper ends of the rod between two terminals. This resistance value determines the level reached by the floater and therefore of the liquid contained in the container.

The resistance measurement is performed by a programmable electronic device (for example a microprocessor or similar device) that converts said value into the volumetric capacity of the container on the basis of its shape.

As an alternative, the sensor is connected directly to an analog reading instrument.

This type of device is widely used due to its low cost but has some known drawbacks, including the following:
- mechanical wear of the sliding contacts;
- value of the overall resistance that can be altered by the deposition, on the copper tracks or on the sliding contacts, of impurities present in the liquid of the tank, which in extreme cases can completely isolate the tracks on which the sliding contact slides, completely altering the resistive value;
- use possible only with certain types of liquids (typically nonconductive ones);
- difficulty in providing a protection of the electronic board if it is designed to be immersed in particularly corrosive liquids.

There are also known floater detection devices for monitoring the quantity of a liquid in a fuel tank which use reed-type contacts or are based on an operating principle of the "active" type, for example via a series of Hall-effect sensors. In this case, when the magnet faces the sensor its output switches digitally from logic '1' to '0'.

The programmable electronic device, to which all the sensors are then connected, interprets this variation and, based on which sensor is switched (i.e., the one that is faced by the magnet), determines the position of the magnet and therefore of the floater and therefore the amount of liquid contained in the tank.

These systems solve the problems related to the sliding contact but are normally more expensive and also provide a discrete (stepwise) variation of the liquid level.

The aim of the present invention is to provide a detection device for monitoring the quantity of a liquid in a container which is capable of solving the problems and overcoming the above described limitations of the background art.

Within this aim, an object of the present invention is to provide a detection device for monitoring the quantity of a liquid in a container that is capable of avoiding the problems of wear and false contacts caused by the sliding contacts.

Another object of the invention is to provide a detection device for monitoring the quantity of a liquid in a container that is more reliable and/or precise in measurement than the background art.

Another object of the invention is to provide a detection device for monitoring the quantity of a liquid in a container that makes it possible to protect the electronic components better and more easily.

A further object of the invention is to provide a detection device for monitoring the quantity of a liquid in a container that can be used in all types of liquids or is in any case more versatile.

Another object of the invention is to provide a detection device for monitoring the quantity of a liquid in a container that is easy to provide and at low costs.

Not the least object of the invention is to provide a valid alternative to the background art.

This aim and these and other objects that will become more apparent hereinafter are achieved by a detection device for monitoring the quantity of a liquid in a container according to claim 1.

This aim and these and other objects are also achieved by a method according to claim 10.

Further characteristics and advantages will become more apparent from the description of a preferred but not exclusive embodiment of a detection device for monitoring the quantity of a liquid in a container, illustrated by way of non-limiting example with the aid of the accompanying drawings, wherein:
Figure 1 is a schematic view of the detection device according to the invention, during use in a container;

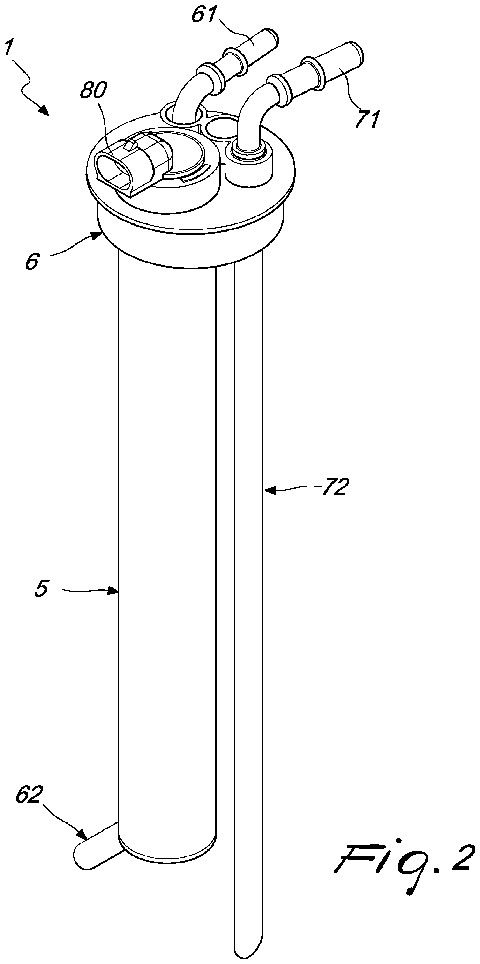

Figure 2 is a perspective view of a possible embodiment of the detection device according to the invention;
Figure 3 is the same view as in Figure 2 with a partial section along a vertical plane;
Figure 4 is a perspective view of some parts of the device of Figure 1;

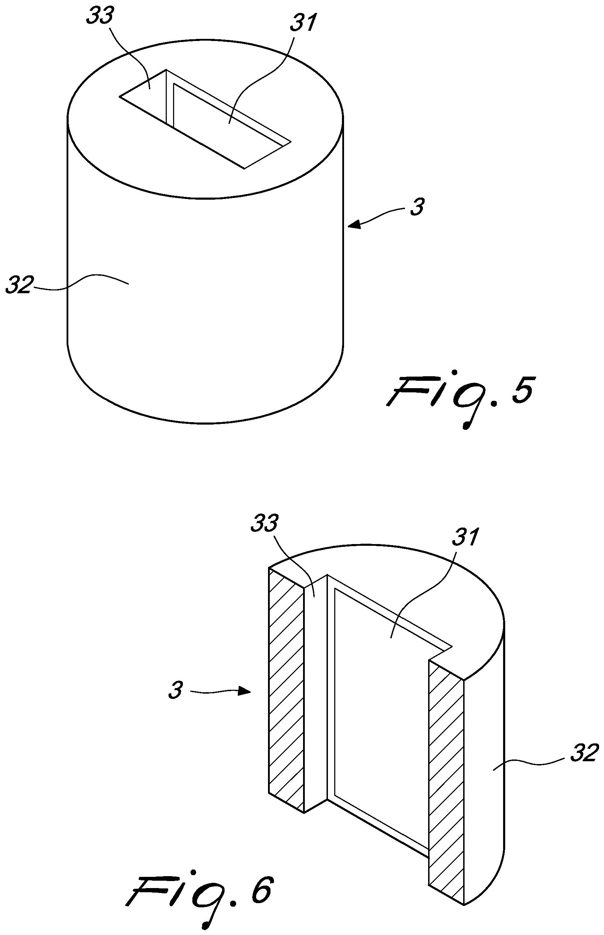

Figure 5 is an enlarged-scale perspective view of the floater of the device of Figure 1;
Figure 6 is a sectional view taken along a vertical plane of the floater of Figure 5;
Figures 7A and 7B are block diagrams which show an aspect of the operation of the detection device according to the invention, related to the detection of the inductance variation of one of the circuits present in the detection device.

With reference to the figures, the detection device, generally designated by the reference numeral 1, is used to monitor (i.e., to measure in a repeated and/or continuous manner) the quantity of a liquid L in a container C, so that a user can monitor the quantity of said liquid without having to access the container C.

The container C to which reference is made can be, by way of non-limiting example, a fuel tank of a vehicle; in this example the liquid L is the fuel present in the tank.

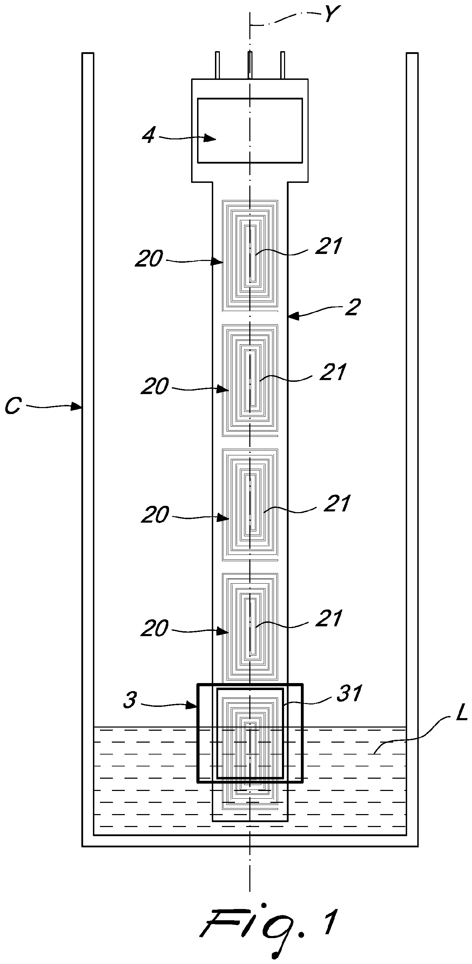

The detection device 1 comprises a longitudinally extended guiding element 2 which is extended along a longitudinal axis Y, adapted (during operation, i.e., in a condition of use as shown in Figure 1) to be arranged vertically in the container C.

In the preferred embodiments, the guiding element 2 is substantially shaped like a bar or rod or other similar rectilinear element.

Preferably, the guiding element 2 comprises, or consists of, an electronic board which in turn comprises a plurality of circuits 20 that will be described hereinafter.

In some embodiments, this electronic board of the guiding element is extended along the longitudinal axis Y for 40-80 cm.

The detection device 1 further comprises a floater 3 which can slide along said longitudinal axis Y and therefore, in practice, can slide along the guiding element 2.

The floater 3 is adapted to float in the liquid L when it is present in the container C, i.e., the floater 3 is an element configured, in a known manner, so as to have such a shape, dimensions and relative density as to make it float in the liquid L, so as to rise and descend along the guiding element 2 according to the level of the liquid L that is present in the container C.

In the non-limiting example shown, the floater 3 has a substantially cylindrical shape; however, the shape and dimensions of said floater 3 can vary according to the requirements.

The detection device 1 also comprises an electronic control unit 4 configured to identify the position of the floater 3 along the longitudinal axis Y, i.e., along the guiding element 2 (i.e., the position of the floater 3 with respect thereto), said position being indicative of the quantity of liquid L that is present in the container C, and therefore to produce, as a function of said position, a signal that is indicative of the quantity of liquid L that is present in the container C.

Such signal that is indicative of the quantity of liquid can be a digital or analog signal of a known type, which can for example, in a known manner, be sent to, or displayed on, an analog or digital interface device (such as a display, a counter, a pointer-type indicator, et cetera) which allows the user to read the quantity of liquid L that is present in the container C.

The electronic control unit 4 is constituted by any programmable electronic device of a known type suitable for the purpose and comprises for example a microprocessor or a microcontroller or other similar device, optionally integrated in an electronic board which optionally can be remote with respect to the guiding element 2.

According to the invention, the guiding element 2 comprises at least one row of circuits 20, which are arranged substantially along the longitudinal axis Y of the guiding element 2 (i.e., aligned longitudinally along the guiding element 2 or in any case arranged along said longitudinal axis Y or along an axis parallel thereto or, equivalently, arranged so that the floater 3, by sliding along the longitudinal axis Y, affects in sequence the circuits 20 one after the other).

Each one of these circuits 20 comprises an inductor 21 and has therefore a respective predetermined (measurable) inductance value.

In greater detail, each one of the circuits 20 is a resonant circuit, i.e., of the type known as LC circuit (which constitutes in practice a band pass filter), comprising the inductor 21 connected to a capacitor.

Preferably, the inductor 21 is constituted by a track made of electrically conducting material (even more preferably copper) which conveniently faces the outside of the guiding element 2.

In the preferred embodiments, the guiding element 2 comprises, or consists of, an electronic board on which the tracks that constitute the inductors 21 are traced (for example printed in a known manner).

Optionally, the guiding element 2 comprises a preferably hermetic protective shell 29 which surrounds and protects the electronic board.

As an alternative or in addition, the electronic board comprising the circuits 20 is covered by a layer of protective resin.

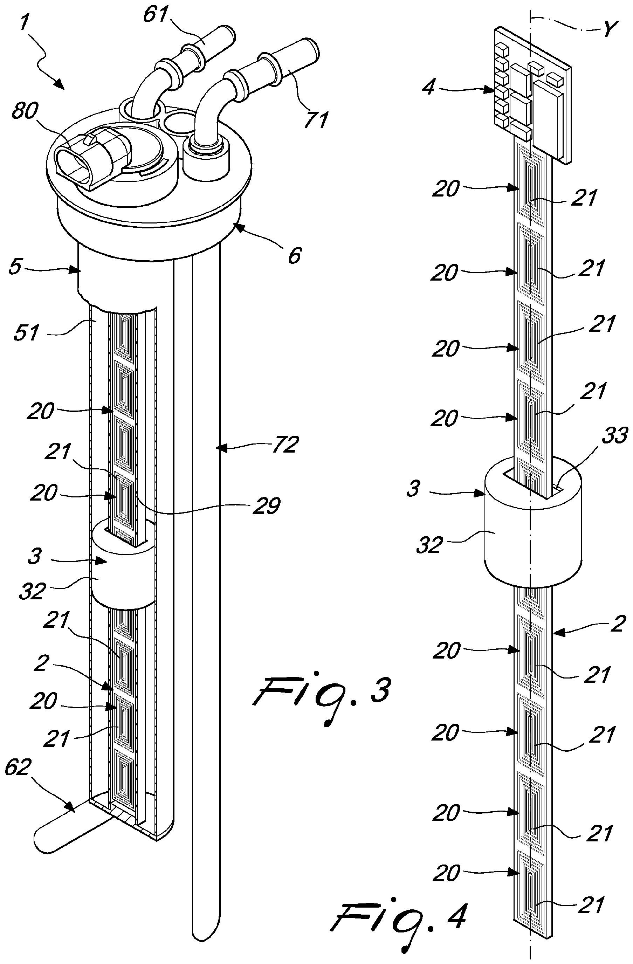

In this case, as shown in Figure 3, the floater 3 therefore slides along the protective shell 29, which acts as a guide.

In this manner, the protective shell 29 (and/or the resin layer) protects the circuits 20 from any damaging chemical or physical action of the liquid.

According to the invention, the floater 3 comprises a proximal element 31 made of electrically conducting material (for example, copper or steel or aluminum, or other conducting metal) which faces the circuits 20, proximate to the guiding element 2, but without contacting it (or in any case without contacting the circuits 20), so as to vary the inductance value of at least one of the circuits 20 when it is arranged thereat, according to the known inductance variation effect used in inductive proximity sensors.

It should be noted that in the illustrated embodiment the protective shell 29 is interposed between the proximal element 31 and the circuits 20. Obviously, the protective shell 29 is made of a material that is permeable to the electromagnetic field so as not to compromise the inductance variation effect described above.

The proximal element 31 is for example a plate, sheet or block made of electrically conducting material.

In practice, the floater 3 slides along the longitudinal axis Y without contact with the guiding element 2 (or in any case without contact with the electronic board and the circuits 20), since a spacing gap and/or the protective shell are present between the circuits 20 and the proximal element 31. The transverse distance between the proximal element and the circuits 20 is such as to allow a detectable variation of the inductance of a circuit 20 when the floater 3 is at the same height as said circuit.

In the preferred embodiments, including the one shown, the floater 3 comprises a floating body 32 provided with a through slot 33 inside which the proximal element 31 is accommodated; as can be seen in the figures, this through slot 33 is crossed by the guiding element 2.

The electronic control unit 4 is functionally connected (in a known manner, for example by means of tracks on a printed circuit) to the circuits 20 and is configured to detect cyclically any variation of the inductance values of said circuits 20 (caused by the presence of the proximal element 31), so as to determine the position of the floater 3 as a function of any variations of the inductance values of the circuits 20 (on the basis of the fact that the circuit 20 that has an inductance variation indicates the presence of the floater 3 in that position).

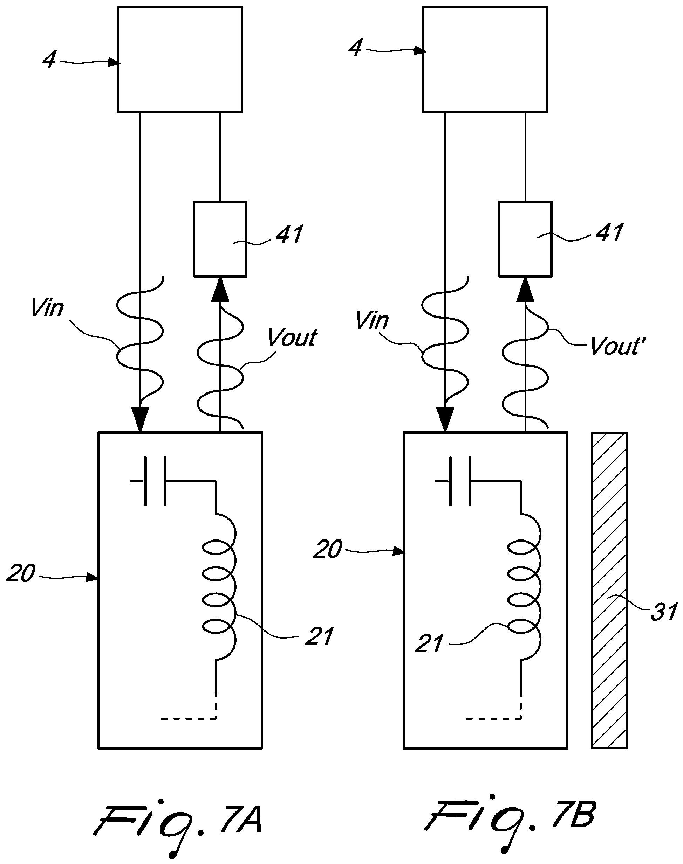

In greater detail, in the preferred embodiments, the electronic control unit 4 is configured to send in input to each one of the circuits 20 a respective input signal Vin (as shown schematically in Figures 7A, 7B) which has a respective resonance frequency (determined and stored by the control unit during the circuit calibration step performed without the "target" 31) and a certain input amplitude, so that an output signal Vout, Vout' which has an output amplitude which depends on the inductance of said circuit is emitted in output from said circuit 20. Alternatively, the electronic control unit generates a variable-frequency signal Vin with the purpose of determining the resonance frequency of the single circuit, which also depends on the value of the inductance of said circuit.

The signals Vin, Vout, Vout' are electrical signals and the amplitude is measured in terms of voltage.

As shown in Figures 7A, 7B, by sending a same signal Vin to the circuit 20, the output signal Vout, when the proximal element 31 is absent, is different in amplitude with respect to the output signal Vout' when the proximal element 31 is present adjacent to the circuit 20.

A signal detector 41 is furthermore present for the measurement of the output amplitude of the output signal Vout, Vout'.

Preferably, there is a signal detector 40 for each circuit. As an alternative, there is a smaller number of detection circuits (just one in an extreme case) each connected to a subset of the circuits. Or, as a further alternative, there is a single signal detector 41 connected to all the circuits.

Preferably, the signal detector is a peak detector which measures the amplitude of the peak of the output signal Vout, Vout'.

Such signal detector 41 is connected to the electronic control unit 4, which is configured to compare said output amplitude measured by the signal detector 40 with a reference value, so as to identify any variation of the inductance value for each circuit 20.

In some embodiments, including the one shown, the detection device 1 comprises moreover a protective wall 5 which surrounds the guiding element 2, forming an internal chamber 51 in which the floater 3 slides.

Advantageously, the protective wall 5 can be configured to act as a guide for the floater, so as to retain said floater 3 so that it slides along the longitudinal axis Y without touching the guiding element 2.

In the particular embodiment shown, the detection device 1 comprises a closure flange 6 which is fixed to an upper end of the guiding element 2 and is configured to close the container C, when the device 1 is in a condition of use in which the guiding element 2 is inserted in the container C. In practice the closure flange 6 acts as a cap for the container C and at the same time holds the detection device 1 in an operating position.

Optionally, the closure flange 6 is crossed by a supply duct 61 and/or an intake duct 71 of the liquid L, optionally provided with respective ends 61, 71 for connection to the hydraulic system that uses the liquid L.

The operating principle of the detection device according to the invention is as follows.

The inductance variation of the circuits 20 is evaluated with respect to the "no-load" value, i.e., in the absence of conducting material.

By exciting the circuit 20 with a fixed-amplitude and variable-frequency wave, one obtains the natural resonance frequency of the LC circuit, i.e., the frequency value for which one has the maximum amplitude of the output signal, i.e., an "amplification" of the signal Vout in output with respect to the signal Vin applied in input. The output signal Vout of the filter constituted by the resonant circuit 20 is measured by virtue of the signal detector 40 (peak detector).

Obviously, if the inductance value is modified (due to the presence of the conducting material of the facing proximal element 31), the natural resonance frequency of the LC circuit 20 is different.

Therefore, for an equal frequency and amplitude of the signal Vin applied in input, the amplitude of the signal Vout in output from the LC filter (i.e., the circuit 20), measured by means of the signal detector 40, assumes different values, discriminating the presence or absence of the material of the proximal element 31.

Preferably, the appropriate excitation frequency is determined for each inductor 21 (therefore, for each circuit 20) present on the guiding element 2 during a preliminary calibration operation, which obviously must take place with the floater 3 positioned so that the conducting material of the proximal element 31 does not overlap any inductor 21.

It is useful to emphasize that the operating principles may be two according to the particularities of the final application. In any case, one proceeds (once in the production line) with the identification of the resonance frequency of each LC circuit and with the permanent storage of said value in association with the observed amplitude of the signal Vout.

The first possible operating principle consists in exciting each circuit with a signal Vin at the stored resonance frequency and measuring the amplitude of the signal Vout which, compared with the stored value, allows establishing the extent of the variation of the inductance value of the LC circuit.

The second possible operating principle consists in exciting each circuit with a variable-frequency signal Vin in order to detect the current resonance frequency which, compared with the stored value, allows again establishing the extent of the variation of the inductance value of the LC circuit.

Therefore, in the preferred embodiments, the electronic control unit 4 is programmed to perform the following operations:
- during the system calibration step: applying to each circuit 20 a signal Vin at a fixed amplitude and a variable frequency so as to find and store, for each circuit 20, its natural resonance frequency, i.e., the one that maximizes the amplitude of the output signal Vout with respect to that of the signal Vin applied in input to the circuit 20; the amplitude of the output signal (resonance Vout) is detected by means of the peak detector 40 and stored together with the natural frequency of the circuit 20;
- during the normal operation step of the device 1: applying to each circuit 20 an input signal Vin with the same amplitude and the natural frequency stored in the calibration step and evaluating whether the amplitude of the output Vout corresponds to the resonance condition (resonance Vout) or not; if the amplitude of the output signal Vout is equal to the resonance amplitude, this means that one is in the condition of absence of facing conducting material; otherwise it means that the floater 3 is present.

By evaluating the extent of the inductance variation of adjacent circuits 20, it is also possible to establish intermediate positions of the floater between the two circuits 20.

Therefore, the present invention also relates to a method for monitoring the quantity of a liquid L present in a container C, which in its essential features comprises the following steps:
a) positioning in the container C a guiding element 2 which comprises a row of resonant circuits 20, each of which comprises an inductor 21, and a floater 3 which can slide freely along the guiding element 2 and accommodates a proximal element 31 made of electrically conducting material;
b) sending a respective input signal Vin to one of the resonant circuits 20 so as to produce an output signal Vout, Vout' from said circuit 20;
c) measuring the amplitude of said output signal Vout, Vout' and comparing it with a predetermined reference value which is indicative of the absence of said proximal element 31 proximate to said circuit 20;
d) if said measured amplitude of the output signal Vout, Vout' is different from said reference value, determining the presence of said floater element 3 at a position (i.e., level, height) that corresponds to the position of said circuit 20;
e) repeating cyclically steps b) to d) for each circuit 20, so as to identify the position of the floater 3;
f) producing a signal which is indicative of the quantity of liquid as a function of said position of the floater 3.

Preferably, the method also comprises a preliminary calibration step in which the following step is performed:
t1) sending to each circuit 20, without the proximal element 31 proximate thereto, an input signal which has a fixed amplitude and a variable frequency, measuring the output signal produced by the circuit 20, so as to identify and store the resonance frequency of said circuit 20, and measuring and storing the amplitude of the signal in output Vout in response to said resonance frequency.

The resonance frequency stored in step t1) will be the frequency of the input signal Vin sent in step b).

The amplitude stored in step t1) constitutes the reference value used in step c).

In practice it has been found that the detection device for monitoring the quantity of a liquid in a container according to the present invention achieves the intended aim and objects since it makes it possible to avoid the problems of wear and false contacts due to sliding contacts.

Another advantage of the detection device according to the invention is that it is more reliable and more precise in the measurement than the background art.

A further advantage of the detection device according to the invention resides in the fact that it can ensure a better protection of the electronic components.

Another advantage of the detection device according to the invention resides in the fact that it is usable in all types of liquids and therefore more versatile.

Another advantage of the detection device according to the invention resides in the fact that it is simple to provide and at low costs.

Moreover, the present invention provides a valid alternative to the background art.

The detection device for monitoring the quantity of a liquid in a container thus conceived is susceptible of numerous modifications and variations, all of which are within the scope of the accompanying claims.

All the details may furthermore be replaced with other technically equivalent elements.

In practice, the materials used, as well as the contingent shapes and dimensions, may be any according to the requirements and the state of the art.

The disclosures in Italian Patent Application No. 102021000017630 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A detection device (1) for monitoring the quantity of a liquid (L) in a container (C), comprising:
- a guiding element (2) which is extended along a longitudinal axis (Y), adapted to be arranged vertically in a container (C),
- a floater (3) which can slide along said longitudinal axis (Y) and is adapted to float in the liquid (L) when it is present in the container (C), and
- an electronic control unit (4) configured to identify the position of the floater (3) along said longitudinal axis (Y) and therefore produce, as a function of said position, a signal that is indicative of the quantity of liquid (L) that is present in the container (C),
**characterized in that** said guiding element (2) comprises at least one row of circuits (20), which are arranged substantially along said longitudinal axis (Y) or along an axis that is parallel thereto, each comprising an inductor (21) and having a respective predetermined inductance value,
and **in that** said floater (3) comprises a proximal element (31) made of electrically conducting material which faces said circuits (20) so as to vary said inductance value of at least one of said circuits (20) when it is arranged thereat;
said electronic control unit (4) being functionally connected to said circuits (20) and being configured to detect cyclically any variation of the inductance values of said circuits (20), so as to determine said position of said floater (3) as a function of any variations of said inductance values.

2. The detection device (1) according to claim 1, wherein each one of said circuits (20) is a resonant circuit which comprises said inductor (21) connected to a capacitor.

3. The detection device (1) according to claim 1 or 2, wherein said inductor (21) is constituted by a track made of electrically conducting material.

4. The device according to the preceding claim, wherein said guiding element (2) comprises an electronic board on which said tracks which constitute the inductors (21) are traced.

5. The device according to the preceding claim, wherein the guiding element (2) comprises a hermetic protective shell (29) which surrounds and protects said electronic board.

6. The detection device (1) according to one or more of the preceding claims, wherein said floater (3) comprises a floating body (32) provided with a through slot (33) inside which said proximal element (31) is accommodated, said through slot (33) being crossed by said guiding element (2).

7. The detection device (1) according to one or more of the preceding claims, wherein said electronic control unit (4) is configured to send in input to each one of said circuits (20) a respective input signal (Vin) which has a respective resonance frequency and an input amplitude so that an output signal (Vout, Vout') which has an output amplitude is emitted in output from said circuit (20),
and which comprises at least one signal detector (40) for measuring said output amplitude of the output signal (Vout, Vout'), said signal detector (41) being connected to said electronic control unit (4), said control unit (4) being configured to compare said output amplitude measured by the signal detector (40) with a reference value, so as to identify said variation, if any, of the inductance value.

8. The detection device (1) according to one or more of the preceding claims, further comprising a protective wall (5) which surrounds said guiding element (2), forming an internal chamber (51) in which said floater (3) slides.

9. The detection device (1) according to one or more of the preceding claims, **characterized in that** it comprises a closure flange (6) which is fixed to an upper end of said guiding element (2) and is configured to close the container (C) in a condition of use in which the guiding element (2) is inserted in said container (C).

10. A method for monitoring the quantity of a liquid (L) which is present in a container (C), comprising the steps of:
a) positioning in the container (C) a guiding element (2) which comprises a row of resonant circuits (20), each of which comprises an inductor (21), and a floater (3) which can slide freely along said guiding element (2), said floater (3) accommodating a proximal element (31) made of electrically conducting material;
b) sending a respective input signal (Vin) to one of said resonant circuits (20) so as to produce an output signal (Vout, Vout') from said circuit (20);
c) measuring the amplitude of said output signal (Vout, Vout') and comparing it with a predetermined reference value which is indicative of the absence of said proximal element (31) proximate to said circuit (20);
d) if said measured amplitude of the output signal (Vout, Vout') is different from said reference value, determining the presence of said floater element (3) at a position which corresponds to the position of said circuit (20);
e) repeating cyclically steps b) to d) for each circuit (20) of the row, so as to identify the position of the floater (3);
f) producing a signal which is indicative of the quantity of liquid (L) that is present in the container (C) as a function of said position of the floater (3).

11. The method according to the preceding claim, comprising a preliminary calibration step in which the following step is performed:
t1) sending to each circuit (20), without the proximal element (31) proximate thereto, an input signal which has a fixed amplitude and a variable frequency, measuring the output signal produced by the circuit (20), so as to identify and store the resonance frequency of said circuit (20), and measuring and storing the amplitude of the signal in output in response to said resonance frequency;
said resonance frequency stored in step t1) being the frequency of the input signal (Vin) sent in step b);
said amplitude stored in step t1) constituting said reference value used in step c).
